# EUROPEAN PATENT SPECIFICATION

(11) **EP 2 336 753 B1**
(45) Date of publication and mention of the grant of the patent: **25.12.2019**
(21) Application number: 10192344.9
(22) Date of filing: 24.11.2010
(51) Int. Cl.: G01N 21/77, G01N 21/64, G01N 31/22

(54) **Photoluminescent oxygen probe with reduced cross sensitivity to humidity**
Fotolumineszente Sauerstoffsonde mit reduzierter Querempfindlichkeit auf Feuchtigkeit
Sonde d'oxygène photo-luminescente avec sensibilité transversale réduite à l'humidité

(30) Priority: 07.12.2009 US 632318
(43) Date of publication of application: 22.06.2011
(73) Proprietor: Luxcel Biosciences Limited, Cork (IE); Mocon, Inc., Minneapolis, Minnesota 55428 (US)
(72) Inventor: Papkovski, Dmitri, Cork Blarney (IE); Mayer, Daniel, Wyoming, MN 55092 (US)
(74) Representative: Purdylucey Intellectual Property

(56) References cited:
- WO-A1-92/12424
- PAPKOVSKY D B ET AL: "Biosensors on the basis of luminescent oxygen sensor: the use of microporous light-scattering support materials", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, SWITZERLAND, vol. 51, no. 1-3, 31 August 1998 (1998-08-31), pages 137-145, XP004154000, ISSN: 0925-4005, DOI: 10.1016/S0925-4005(98)00171-3
- O'MAHONY F C ET AL: "Non-destructive assessment of oxygen levels in industrial modified atmosphere packaged cheddar cheese", FOOD CONTROL, BUTTERWORTH, LONDON, GB, vol. 17, no. 4, 1 April 2006 (2006-04-01), pages 286-292, XP024961702, ISSN: 0956-7135, DOI: 10.1016/J.FOODCONT.2004.10.013 [retrieved on 2006-04-01]
- M. FITZGERALD ET AL: "Nondestructive Monitoring of Oxygen Profiles in Packaged Foods Using Phase-Fluorimetric Oxygen Sensor", JOURNAL OF FOOD SCIENCE, vol. 66, no. 1, 1 January 2001 (2001-01-01), pages 105-110, XP55023695, ISSN: 0022-1147, DOI: 10.1111/j.1365-2621.2001.tb15590.x

## Description

### BACKGROUND

Solid-state polymeric materials based on oxygen-sensitive photoluminescent dyes are widely used as optical oxygen sensors and probes. See, for example United States Published Patent Applications 2009/0029402, 2008/8242870, 2008/215254, 2008/199360, 2008/190172, 2008/148817, 2008/146460, 2008/117418, 2008/0051646, 2006/0002822, 7,569,395, 7,534,615, 7,368,153, 7,138,270, 6,689,438, 5,718,842, 4,810,655, and 4,476,870. Such optical sensors are available from a number of suppliers, including Presens Precision Sensing, GmbH of Regensburg, Germany, Oxysense of Dallas, Texas, United States, and Luxcel Biosciences, Ltd of Cork, Ireland.

To increase photoluminescent signals obtainable from the sensor and thus increase the reliability of optical measurements, oxygen-sensitive materials often incorporate a light-scattering additive (*e.g*., TiO2 - Klimant I., Wolfbeis O.S. - Anal Chem, 1995, v.67, p.3160-3166) or underlayer (*e.g*., microporous support - see Papkovsky, DB et al.- Sensors Actuators B, 1998, v.51, p.137-145). Unfortunately, such probes tend to show significant cross-sensitivity to humidity, preventing them from gaining wide acceptance for use in situations where humidity of the samples under investigation cannot be controlled. O'Mahony, FC et al. - Food Control, Butterworth, London, GB, vol. 17, no. 4, pages 286-292 describes a method for measuring oxygen concentration within a confined space employing an oxygen sensitive probe while M. Fitzgerald et. al - Journal of Food Science, vol. 66. no. 1, pages 105-110 describe the monitoring of oxygen levels in packages foods employing phase-fluorimetric oxygen sensors and WO 92/12424 describes an oxygen-sensitive probe having a polypropylene support layer requiring a surfactant for wetting.

Hence, a need exists for an optical photoluminescent oxygen probe with reduced cross-sensitivity to humidity.

### SUMMARY OF THE INVENTION

A first aspect of the invention is an oxygen-sensitive probe as defined in claim 1, the probe comprising a microporous wettable polyolefin support layer (30) and an oxygen-sensitive photoluminescent dye applied onto a first major surface of said support layer (30) forming a thin film coating on the support layer and wherein the microporous wettable polyolefin support layer is a non-woven spinlaid or spunbond polypropylene fabric with hydrophilic pendant groups. The oxygen-sensitive photoluminescent dye is preferably applied as a solid state composition comprising the oxygen-sensitive photoluminescent dye embedded within an oxygen-permeable polymer matrix.

A second aspect of the invention is a method for measuring oxygen concentration within an enclosed space as defined in claim 11, the method employing an oxygen-sensitive probe according to the first aspect of the invention. The method includes the steps of (A) obtaining an oxygen-sensitive probe according to the first aspect of the invention, (B) placing the probe within the enclosed space, and (C) ascertaining oxygen concentration within the enclosed space by (i) repeatedly exposing the probe to excitation radiation over time, (ii) measuring radiation emitted by the excited probe after at least some of the exposures, (iii) measuring passage of time during the repeated excitation exposures and emission measurements, and (iv) converting at least some of the measured emissions to an oxygen concentration based upon a known conversion algorithm.

Preferably, at least one of (i) at least two ascertained oxygen concentrations and the time interval between those reported concentrations, and (ii) a rate of change in oxygen concentration within the enclosed space calculated from data obtained in step (C) is reported.

A third aspect of the invention is a method of preparing a photoluminescent oxygen-sensitive probe as defined in claim 14. The method includes the steps of (A) preparing a coating cocktail which contains the photoluminescent oxygen-sensitive dye and the oxygen-permeable polymer in an organic solvent, (B) applying the cocktail to the first major surface of the support material, and (C) allowing the cocktail to dry, whereby a solid-state thin film coating is formed on the support, thereby forming the photoluminescent oxygen-sensitive probe.

### BRIEF DESCRIPTION OF THE DRAWINGS

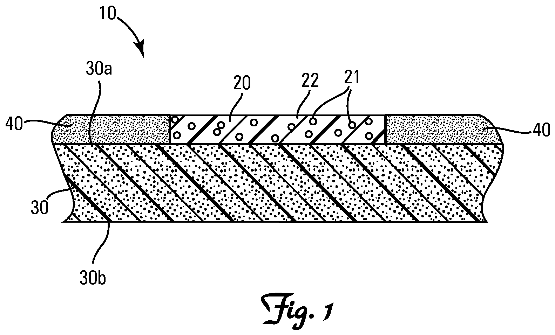

Figure 1 is a grossly enlarge cross-sectional side view of a central portion of one embodiment of the invention.

### DETAILED DESCRIPTION OF A PREFERRED EMBODIMENT

### Definitions

As used herein, including the claims, the phrase **"*oxygen permeable*"** means a material that when formed into a 1 mil film has an oxygen transmission rate of greater than 1,000 c³/m2 day when measured in accordance with ASTM D 3985.
As used herein, including the claims, the term **"*spinlaid*"** means a process for producing fibrous nonwoven fabric directly from extruded polymer fibers and includes spunbond and meltblown techniques.
As used herein, including the claims, the phrase **"*thin film*"** means a film having a thickness of less than 10µm.
As used herein, including the claims, the term **"*wettable*"** means the ability of water to maintain contact with the surface of the solid sufficient to provide good aqueous wicking characteristics.
As used herein, including the claims, the phrase **"*moderately wettable*"** means that water maintains a contact angle θ of less than 90°.
As used herein, including the claims, the phrase **"*highly wettable*"** means that water maintains a contact angle θ of less than 60°.
As used herein, including the claims, the phrase **"*completely wettable*"** means that water maintains a contact angle θ of less than 30°.

### Nomenclature

- **10**: Probe
- **20**: Solid State Composition
- **21**: Oxygen-Sensitive Photoluminescent Dye
- **22**: Oxygen-Permeable Polymer Matrix
- **30**: Support Layer
- **30a**: First or Upper Major Surface of Support Layer
- **30b**: Second or Lower Major Surface of Support Layer
- **40**: Pressure Sensitive Adhesive Layer

### Description

### Construction

Referring generally to Figure 1, a first aspect of the invention is an oxygen-sensitive probe or sensor **10** useful for optically measuring oxygen concentration within an enclosed space (not shown), such as the retention chamber (not shown) of a hermetically sealed package (not shown). The probe **10** includes a thin film of a solid state photoluminescent composition **20** coated onto a first major surface **30a** of a support layer **30.** The solid state photoluminescent composition **20** includes an oxygen-sensitive photoluminescent dye **21** embedded within an oxygen-permeable polymer matrix **22.**

The oxygen-sensitive photoluminescent dye **21** used in the solid state photoluminescent composition **20** may be selected from any of the well-known oxygen sensitive photoluminescent dyes **21.** One of routine skill in the art is capable of selecting a suitable dye **21** based upon the intended use of the probe **10.** A nonexhaustive list of suitable oxygen sensitive photoluminescent dyes **21** includes specifically, but not exclusively, ruthenium(II)-bipyridyl and ruthenium(II)-diphenylphenanothroline complexes, porphyrin-ketones such as platinum(II)-octaethylporphine-ketone, platinum(II)-porphyrin such as platinum(II)-tetrakis(pentafluorophenyl)porphine, palladium(II)-porphyrin such as palladium(II)-tetrakis(pentafluorophenyl)porphine, phosphorescent metallocomplexes of tetrabenzoporphyrins, chlorins, azaporphyrins, and long-decay luminescent complexes of iridium(III) or osmium(II).

Typically, the hydrophobic oxygen-sensitive photoluminescent dye **21** is compounded with a suitable oxygen-permeable and hydrophobic carrier matrix **22.** Again, one of routine skill in the art is capable of selecting a suitable oxygen-permeable hydrophobic carrier matrix **22** based upon the intended use of the probe **10** and the selected dye **21.** A nonexhaustive list of suitable polymers for use as the oxygen-permeable hydrophobic carrier matrix **22** includes specifically, but not exclusively, polystryrene, polycarbonate, polysulfone, polyvinyl chloride and some co-polymers.

Referring again to Figure 1, the probe **10** preferably includes a layer of a pressure sensitive adhesive **40** on the first major surface **30a** of the support layer **30** for facilitating attachment of the probe **10** to a surface (not shown) of a container (not shown) that defines the enclosed space (not shown) whose oxygen concentration is to be measured, with the photoluminescent solid state composition **20** on the probe **10** facing outward from the container (not shown) through an area of the container (not shown) that is transparent or translucent to radiation at the excitation and emission wavelengths of the dye **21** in the photoluminescent solid state composition **20.** The adhesive **40** may but should not cover the photoluminescent solid state composition **20.**

The support layer **30** is a sheet of a microporous wettable polyolefin with first and second major surfaces **30a** and **30b.** Such materials, when employed as the support layer **30** for the photoluminescent solid state composition **20,** substantially reduces cross-sensitivity of the photoluminescent solid state composition **20** to humidity relative to probes **10** employing other traditional materials. The support layer **30** is preferably highly wettable and most preferably completely wettable. According to the invention, the material of the support layer **30** is a non-woven spinlaid or spunbond polypropylene fabric grafted with hydrophilic pendant groups such as acrylic acid. One such fabric is available from Freudenberg Nonwovens NA of Hopkinsville, Kentucky and Freudenberg Nonwovens Ltd of West Yorkshire, United Kingdom under the designation 700/70 (a nonwoven microporous spunbond polypropylene fabric grafted with acrylic acid to render the polymer wettable and etched with a caustic). In addition, this type of support material substantially increases the luminescent intensity signals obtainable from the sensor **10** and improves mechanical properties of the oxygen-sensitive coating (when compared to traditional sensors on planar, non-porous polymeric support such as polyester Mylar® film).

The support layer **30** is preferably between about 30 µm and 500 µm thick.

The probes **10** of the present invention have little cross-sensitivity to humidity, with a change of luminescence lifetime of less than 5% with a change in relative humidity of an analyte gas from 1% to 90%. By proper selection of the support layer **30,** based upon various factors including the particular photoluminescent solid state composition **20** employed, a change in luminescence lifetime of less than 3% and even less than 1% can be readily achieved.

### Manufacture

The probe **10** can be manufactured by the traditional methods employed for manufacturing such probes **10.** Briefly, the probe **10** can be conveniently manufactured by (A) preparing a coating cocktail (not shown) which contains the photoluminescent oxygen-sensitive dye **21** and the oxygen-permeable polymer **22** in an organic solvent (not shown) such as ethylacetate, (B) applying the cocktail to the first major surface **30a** of a support material **30** or soaking the support material in the cocktail (not shown), and (C) allowing the cocktail (not shown) to dry, whereby a solid-state thin film coating **20** is formed on the support 30, thereby forming the photoluminescent oxygen-sensitive probe **10.** The resultant probe **10** is preferably heat treated to remove mechanical stress from the sensor material which is associated with its preparation (solidification and substantial volume reduction).

Generally, the concentration of the polymer **22** in the organic solvent (not shown) should be in the range of 0.1 to 20% w/w, with the ratio of dye **21** to polymer **22** in the range of 1:50 to 1:5,000 w/w.

A layer of pressure sensitive adhesive **40** can optionally be coated onto the first major surface **30a** of the support material **30** by conventional coating techniques.

### Use

The probe **10** can be used to quickly, easily, accurately and reliably measure oxygen concentration within an enclosed space (not shown) regardless of the relative humidity within the enclosed space (not shown). The probe **10** can be used to measure oxygen concentration in the same manner as other oxygen sensitive photoluminescent probes. Briefly, the probe **10** is used to measure oxygen concentration within an enclosed space (not shown) by (A) placing the probe **10** within the enclosed space (not shown) at a location where radiation at the excitation and emission wavelengths of the dye **21** can be transmitted to and received from the photoluminescent solid state composition **20** with minimal interference and without opening or otherwise breaching the integrity of the enclosure, and (B) ascertaining the oxygen concentration within the enclosed space (not shown) by (i) repeatedly exposing the probe **10** to excitation radiation over time, (ii) measuring radiation emitted by the excited probe **10** after at least some of the exposures, (iii) measuring passage of time during the repeated excitation exposures and emission measurements, and (iv) converting at least some of the measured emissions to an oxygen concentration based upon a known conversion algorithm. Such conversion algorithms are well know to and readily developable by those with routine skill in the art.

In a similar fashion, the probe **10** can be used to quickly, easily, accurately and reliably monitor changes in oxygen concentration within an enclosed space (not shown) regardless of the relative humidity within the enclosed space (not shown). The probe **10** can be used to monitor changes in oxygen concentration in the same manner as other oxygen sensitive photoluminescent probes. Briefly, the probe **10** is used to monitor changes in oxygen concentration within an enclosed space (not shown) by (A) placing the probe **10** within the enclosed space (not shown) at a location where radiation at the excitation and emission wavelengths of the dye **21** can be transmitted to and received from the photoluminescent solid state composition **20** with minimal interference and without opening or otherwise breaching the integrity of the enclosure, (B) ascertaining the oxygen concentration within the enclosed space (not shown) over time by (i) repeatedly exposing the probe **10** to excitation radiation over time, (ii) measuring radiation emitted by the excited probe **10** after at least some of the exposures, (iii) measuring passage of time during the repeated excitation exposures and emission measurements, and (iv) converting at least some of the measured emissions to an oxygen concentration based upon a known conversion algorithm, and (C) reporting at least one of (i) at least two ascertained oxygen concentrations and the time interval between those reported concentrations, and (ii) a rate of change in oxygen concentration within the enclosed space calculated from data obtained in step (B). Conversion algorithms used to convert the measured emissions to an oxygen concentration are well know to and readily developable by those with routine skill in the art.

The radiation emitted by the excited probe **10** can be measured in terms of intensity and/or lifetime (rate of decay, phase shift or anisotropy), with measurement of lifetime generally preferred as a more accurate and reliable measurement technique when seeking to establish oxygen concentration via measurement of the extent to which the dye **21** has been quenched by oxygen.

## Claims

1. An oxygen-sensitive probe (10) comprising a microporous wettable polyolefin support layer (30) and an oxygen-sensitive photoluminescent dye (21) applied onto a first major surface (30a) of said support layer (30) forming a thin film coating on the support layer and wherein the microporous wettable polyolefin support layer is a non-woven spinlaid or spunbond polypropylene fabric with hydrophilic pendant groups.

2. The oxygen-sensitive probe of Claim 1, in which the hydrophilic pendant groups are acrylic acid groups.

3. The oxygen-sensitive probe of Claims 1 or 2 further comprising a layer of a pressure-sensitive adhesive (40) applied onto the first major surface (30a) of the support layer (30).

4. The oxygen-sensitive probe of any one of the preceding Claims wherein the oxygen-sensitive photoluminescent dye (21) is applied as a solid state composition comprising the oxygen-sensitive photoluminescent dye embedded within an oxygen-permeable hydrophobic polymer matrix (22).

5. The oxygen-sensitive probe of any preceding Claim wherein the oxygen-sensitive photoluminescent dye (21) is a transition metal complex.

6. The oxygen-sensitive probe of Claim 5 wherein the transition metal complex is selected from the group consisting of a ruthenium bipyridyl, a ruthenium diphenylphenanothroline, a platinum porphyrin, a palladium porphyrin, a phosphorescent metallocomplex of a porphyrin-ketone, an azaporphyrin, a tetrabenzoporphyrin, a chlorin, and a long-decay luminescent complex of iridium(III) or osmium(II).

7. The oxygen-sensitive probe of Claim 4 wherein the oxygen-permeable polymer matrix (22) is selected from the group consisting of polystyrene, polycarbonate, polysulfone, and polyvinyl chloride.

8. The oxygen-sensitive probe of any preceding Claim wherein the wettable polyolefin support layer (30) is highly wettable such that water can maintain a contact angle θ of less than 60° with the surface of the layer or wherein the wettable polyolefin support layer (30) is completely wettable such that water can maintain a contact angle θ of less than 30° with the surface of the layer.

9. The oxygen-sensitive probe of any preceding Claim, wherein the support layer (30) is between 30 µm and 500 µm thick.

10. The oxygen-sensitive probe of Claim 4 or of any of Claims 5-9 when dependent on Claim 4, wherein the solid state composition (20) is applied only to the first major surface (30a) of the support layer.

11. A method for measuring oxygen concentration within an enclosed space, comprising the steps of:
(a) obtaining an oxygen-sensitive probe according to any preceding Claim,
(b) placing the probe within the enclosed space, and
(c) ascertaining oxygen concentration within the enclosed space by:
(i) repeatedly exposing the probe to excitation radiation over time,
(ii) measuring radiation emitted by the excited probe after at least some of the exposures,
(iii) measuring passage of time during the repeated excitation exposures and emission measurements, and
(iv) converting at least some of the measured emissions to an oxygen concentration based upon a known conversion algorithm.

12. The method of Claim 11 further comprising a step of reporting at least one of (i) at least two ascertained oxygen concentrations and the time interval between those reported concentrations, and (ii) a rate of change in oxygen concentration within the enclosed space calculated from data obtained in step (c).

13. The method of Claim 11 or 12, wherein the enclosed space is a retention chamber of a hermetically sealed package.

14. A method of preparing the photoluminescent oxygen-sensitive probe according to Claim 4 or to any of Claims 5 to 10 when dependent on Claim 4, which includes at least the steps of:
(a) preparing a coating cocktail which contains the photoluminescent oxygen-sensitive dye (21) and the oxygen-permeable polymer (22) in an organic solvent,
(b) applying the cocktail to the first major surface (30a) of the support layer (30), and
(c) allowing the cocktail to dry, whereby a solid-state thin film coating (20) is formed on the support layer (30), thereby forming the photoluminescent oxygen-sensitive probe (10).

15. The method of Claim 14, wherein the cocktail comprises a solution of platinum-octaethylporphine-ketone and polystyrene in ethylacetate, and/or wherein the concentration of the polymer in organic solvent is in the range of 0.1 to 20% w/w and the dye:polymer ratio is in the range of 1:20 to 1:10,000 w/w.

16. The method of Claim 14 or 15, further comprising a step of heat treating the probe, and/or further comprising a step of coating a pressure-sensitive adhesive (40) onto the first major surface (30a) of the support layer (30).

## Patentansprüche

1. Sauerstoffsensitive Sonde (10), die Folgendes umfasst: eine mikroporöse benetzbare Polyolefin-Trägerschicht (30) und einen sauerstoffsensitiven photolumineszierenden Farbstoff (21), der auf eine erste Hauptoberfläche (30a) der Trägerschicht (30) zur Bildung einer Dünnfilmbeschichtung auf der Trägerschicht aufgetragen ist, und wobei die mikroporöse benetzbare Polyolefin-Trägerschicht ein Spunlaid- oder Spunbond-Polypropylen-Vliesstoff mit hydrophilen anhängenden Gruppen ist.

2. Sauerstoffsensitive Sonde nach Anspruch 1, in der die hydrophilen anhängenden Gruppen Acrylsäuregruppen sind.

3. Sauerstoffsensitive Sonde nach Anspruch 1 oder 2, die weiter eine Schicht eines druckempfindlichen Haftmittels (40) umfasst, das auf die erste Hauptoberfläche (30a) der Trägerschicht (30) aufgetragen ist.

4. Sauerstoffsensitive Sonde nach einem der vorstehenden Ansprüche, wobei der sauerstoffsensitive photolumineszierende Farbstoff (21) als eine Festphasenzusammensetzung aufgetragen ist, die den sauerstoffsensitiven photolumineszierenden Farbstoff umfasst, der innerhalb einer sauerstoffdurchlässigen hydrophoben Polymermatrix (22) eingebettet ist.

5. Sauerstoffsensitive Sonde nach einem vorstehenden Anspruch, wobei der sauerstoffsensitive photolumineszierende Farbstoff (21) ein Übergangsmetallkomplex ist.

6. Sauerstoffsensitive Sonde nach Anspruch 5, wobei der Übergangsmetallkomplex aus der Gruppe ausgewählt ist, die aus Folgenden besteht: einem Rutheniumbipyridyl, einem Rutheniumdiphenylphenanthrolin, einem Platinporphyrin, einem Palladiumporphyrin, einem phosphoreszierenden Metallkomplex eines Porphyrinketons, eines Azaporphyrins, eines Tetrabenzoporphyrins, eines Chlorins, und einem lumineszierenden Komplex von Iridium(III) oder Osmium(II) mit langem Abklingen.

7. Sauerstoffsensitive Sonde nach Anspruch 4, wobei die sauerstoffdurchlässige Polymermatrix (22) aus der Gruppe ausgewählt ist, die aus Polystyrol, Polycarbonat, Polysulfon und Polyvinylchlorid besteht.

8. Sauerstoffsensitive Sonde nach einem vorstehenden Anspruch, wobei die benetzbare Polyolefin-Trägerschicht (30) stark benetzbar ist, sodass Wasser einen Kontaktwinkel θ von weniger als 60 ° mit der Oberfläche der Schicht aufrechterhalten kann, oder wobei die benetzbare Polyolefin-Trägerschicht (30) vollständig benetzbar ist, sodass Wasser einen Kontaktwinkel θ von weniger als 30 ° mit der Oberfläche der Schicht aufrechterhalten kann.

9. Sauerstoffsensitive Sonde nach einem vorstehenden Anspruch, wobei die Trägerschicht (30) zwischen 30 µm und 500 µm dick ist.

10. Sauerstoffsensitive Sonde nach Anspruch 4 oder nach einem der Ansprüche 5-9, bei Abhängigkeit von Anspruch 4, wobei die Festphasenzusammensetzung (20) nur auf die erste Hauptoberfläche (30a) der Trägerschicht aufgetragen ist.

11. Verfahren zur Messung der Sauerstoffkonzentration innerhalb eines geschlossenen Raums, das die folgenden Schritte umfasst:
(a) Erhalten einer sauerstoffsensitiven Sonde nach einem vorstehenden Anspruch,
(b) Einbringen der Sonde innerhalb des geschlossenen Raums und
(c) Ermitteln der Sauerstoffkonzentration innerhalb des geschlossenen Raums durch:
(i) wiederholte Exposition der Sonde gegenüber Anregungsstrahlung im Zeitverlauf,
(ii) Messen von Strahlung, die durch die angeregte Sonde nach mindestens einigen der Expositionen emittiert wird,
(iii) Messen des Zeitablaufs während der wiederholten Anregungsexpositionen und Emissionsmessungen und
(iv) Umwandeln von mindestens einigen der gemessenen Emissionen in eine Sauerstoffkonzentration basierend auf einem bekannten Umwandlungsalgorithmus.

12. Verfahren nach Anspruch 11, das weiter einen Schritt des Meldens von mindestens einem von Folgenden umfasst: (i) mindestens zwei ermittelten Sauerstoffkonzentrationen und dem Zeitintervall zwischen diesen gemeldeten Konzentrationen und (ii) einer Änderungsrate der Sauerstoffkonzentration innerhalb des geschlossenen Raums, die aus den Daten, die im Schritt (c) erhalten wurden, berechnet wird.

13. Verfahren nach Anspruch 11 oder 12, wobei der geschlossene Raum eine Retentionskammer eines hermetisch abgedichteten Gehäuses ist.

14. Verfahren zur Herstellung der photolumineszierenden sauerstoffsensitiven Sonde nach Anspruch 4 oder nach einem der Ansprüche 5 bis 10, bei Abhängigkeit von Anspruch 4, das mindestens die folgenden Schritte umfasst:
(a) Herstellen eines Beschichtungscocktails, der den photolumineszierenden sauerstoffsensitiven Farbstoff (21) und das sauerstoffdurchlässige Polymer (22) in einem organischen Lösungsmittel enthält,
(b) Auftragen des Cocktails auf die erste Hauptoberfläche (30a) der Trägerschicht (30) und
(c) Ermöglichen, dass der Cocktail trocknet, wodurch eine Festphasen-Dünnfilmbeschichtung (20) auf der Trägerschicht (30) ausgebildet wird, wodurch die photolumineszierende sauerstoffsensitive Sonde (10) ausgebildet wird.

15. Verfahren nach Anspruch 14, wobei der Cocktail eine Lösung von Platin-Octaethylporphin-Keton und Polystyrol in Ethylacetat umfasst und/oder wobei die Konzentration des Polymers im organischen Lösungsmittel in dem Bereich von 0,1 bis 20 m/m-% liegt und das Farbstoff: Polymer-Verhältnis in dem Bereich von 1 : 20 bis 1 : 10 000 m/m liegt.

16. Verfahren nach Anspruch 14 oder 15, das weiter einen Schritt des Wärmebehandelns der Sonde umfasst und/oder weiter einen Schritt des Beschichtens eines druckempfindlichen Haftmittels (40) auf die erste Hauptoberfläche (30a) der Trägerschicht (30) umfasst.

## Revendications

1. Sonde sensible à l'oxygène (10) comprenant une couche de support en polyoléfine mouillable et microporeuse (30) et un colorant photoluminescent sensible à l'oxygène (21) appliqué sur une première surface majeure (30a) de ladite couche de support (30) formant un revêtement de film fin sur la couche de support et où la couche de support en polyoléfine mouillable et microporeuse est constituée d'un tissu en polypropylène filé-lié ou filé non tissé ayant des groupements pendants hydrophiles.

2. Sonde sensible à l'oxygène selon la revendication 1, dans laquelle les groupements pendants hydrophiles sont des groupements d'acide acrylique.

3. Sonde sensible à l'oxygène selon les revendications 1 ou 2, comprenant en outre un adhésif sensible à la pression (40) appliqué sur la première surface majeure (30a) de la couche de support (30).

4. Sonde sensible à l'oxygène selon l'une quelconque des revendications précédentes, dans laquelle le colorant photoluminescent sensible à l'oxygène (21) est appliqué sous forme de composition à l'état solide comprenant le colorant photoluminescent sensible à l'oxygène inclus au sein d'une matrice polymère hydrophobe et perméable à l'oxygène (22).

5. Sonde sensible à l'oxygène selon l'une quelconque des revendications précédentes, dans laquelle le colorant photoluminescent sensible à l'oxygène (21) est un complexe de métal de transition.

6. Sonde sensible à l'oxygène selon la revendication 5, dans laquelle le complexe de métal de transition est choisi dans le groupe constitué par un bipyridyle de ruthénium, une diphényl-phénanthroline de ruthénium, une porphyrine de platine, une porphyrine de palladium, un métallo-complexe phosphorescent d'une porphyrine-cétone, une azaporphyrine, une tétrabenzoporphyrine, une chlorine, et un complexe luminescent d'iridium(III) ou d'osmium(II) à longue désintégration.

7. Sonde sensible à l'oxygène selon la revendication 4, dans laquelle la matrice polymère perméable à l'oxygène (22) est choisie dans le groupe constitué par le polystyrène, le polycarbonate, la polysulfone, et le chlorure de polyvinyle.

8. Sonde sensible à l'oxygène selon l'une quelconque des revendications précédentes, dans laquelle la couche de support en polyoléfine mouillable (30) est hautement mouillable, de sorte que l'eau peut maintenir un angle de contact θ inférieur à 60° avec la surface de la couche ou où la couche de support en polyoléfine mouillable (30) est complètement mouillable, de sorte que l'eau peut maintenir un angle de contact θ inférieur à 30° avec la surface de la couche.

9. Sonde sensible à l'oxygène selon l'une quelconque des revendications précédentes, dans laquelle la couche de support (30) possède une épaisseur comprise entre 30 µm et 500 µm.

10. Sonde sensible à l'oxygène selon la revendication 4 ou selon l'une quelconque des revendications 5-9 lors d'une dépendance vis-à-vis de la revendication 4, dans laquelle la composition à l'état solide (20) n'est appliquée qu'à la première surface majeure (30a) de la couche de support.

11. Méthode de mesure de la concentration en oxygène au sein d'un espace renfermé, comprenant les étapes consistant à :
(a) obtenir une sonde sensible à l'oxygène selon l'une quelconque des revendications précédentes,
(b) placer la sonde au sein de l'espace renfermé, et
(c) évaluer la concentration en oxygène au sein de l'espace renfermé par
(i) l'exposition répétée de la sonde à un rayonnement d'excitation au cours du temps,
(ii) la mesure du rayonnement émis par la sonde excitée après au moins une partie des expositions,
(iii) la mesure du passage du temps pendant les expositions d'excitation répétées et les mesures d'émission, et
(iv) la conversion d'au moins une partie des émissions mesurées en une concentration en oxygène sur la base d'un algorithme de conversion connu.

12. Méthode selon la revendication 11, comprenant en outre une étape consistant à reporter au moins l'un(e) parmi (i) au moins deux concentrations en oxygène évaluées et l'intervalle de temps entre ces concentrations reportées, et (ii) un taux de changement en concentration en oxygène au sein de l'espace renfermé calculé à partir des données obtenues dans l'étape (c).

13. Méthode selon la revendication 11 ou 12, dans laquelle l'espace renfermé est une chambre de rétention d'un emballage hermétiquement fermé.

14. Méthode de préparation de la sonde sensible à l'oxygène photoluminescente selon la revendication 4 ou selon l'une quelconque des revendications 5 à 10 lors d'une dépendance vis-à-vis de la revendication 4, qui comporte au moins les étapes consistant à :
(a) préparer un cocktail de revêtement qui contient le colorant photoluminescent sensible à l'oxygène (21) et le polymère perméable à l'oxygène (22) dans un solvant organique,
(b) appliquer le cocktail à la première surface majeure (30a) de la couche de support (30), et
(c) laisser le cocktail sécher, ce par quoi un revêtement de film fin à l'état solide (20) se forme sur la couche de support (30), formant ainsi la sonde sensible à l'oxygène photoluminescente (10).

15. Méthode selon la revendication 14, dans laquelle le cocktail comprend une solution de platine-octaéthylporphine-cétone et de polystyrène dans de l'acétate d'éthyle, et/ou où la concentration en polymère dans le solvant organique se trouve dans la plage allant de 0,1 à 20% p/p et le rapport du colorant au polymère se trouve dans la plage allant de 1:20 à 1:10 000 p/p.

16. Méthode selon la revendication 14 ou 15, comprenant en outre une étape de traitement thermique de la sonde, et/ou comprenant en outre une étape de revêtement d'un adhésif sensible à la pression (40) sur la première surface majeure (30a) de la couche de support (30).
